# EUROPEAN PATENT SPECIFICATION

(11) **EP 4 394 529 B1**
(45) Date of publication and mention of the grant of the patent: **04.03.2026**
(21) Application number: 22860159.7
(22) Date of filing: 28.07.2022
(51) Int. Cl.: G05B 15/02, G05B 19/418, F24H 9/20, G05B 19/042, C02F 1/00, C02F 5/00, C02F 103/42

(54) **CONTROL METHOD AND DEVICE FOR HOUSEHOLD APPLIANCE**
STEUERUNGSVERFAHREN UND -VORRICHTUNG FÜR HAUSHALTSGERÄT
PROCÉDÉ ET DISPOSITIF DE COMMANDE POUR APPAREIL ÉLECTROMÉNAGER

(30) Priority: 26.08.2021 CN 202110988206
(43) Date of publication of application: 03.07.2024
(73) Proprietor: Qingdao Economic and Technological Development Zone Haier Water Heater Co., Ltd., Qingdao, Shangdong 266510 (CN); Haier Smart Home Co., Ltd., Qingdao, Shandong 266101 (CN)
(72) Inventor: DU, Kankan, Qingdao, Shandong 266101 (CN); WANG, Changgang, Qingdao, Shandong 266101 (CN); XUE, Xiangyu, Qingdao, Shandong 266101 (CN); LI, Haidong, Qingdao, Shandong 266101 (CN)
(74) Representative: Barker Brettell LLP
(86) International application number: PCT/CN2022/108471
(87) International publication number: WO 2023/024813

(56) References cited:
- CN-A- 101 808 563
- CN-A- 108 451 469
- CN-A- 109 467 163
- CN-A- 110 411 025
- CN-A- 110 411 029
- CN-A- 112 786 038
- CN-A- 112 923 573
- CN-A- 113 108 475
- CN-A- 113 108 476
- CN-A- 113 154 687
- CN-U- 207 684 988
- CN-U- 207 936 513
- KR-A- 20060 111 150
- US-B1- 6 705 534

## Description

### TECHNICAL FIELD

The present application relates to the technical field of household appliances and, in particular, to a control method, a control device, and a computer readable storage medium for a household appliance.

### BACKGROUND

With the constant improvement of people's living standards and science and technology, people's demand for quality of life is getting higher and higher. More and more users choose to install water softeners in their bathrooms to soften the bathing water in the water heater by the water softener, thereby improving the bathing experience.

In the prior art, it often needs a user to manually set parameters of a water softener, and the convenience of water softener control is poor.

CN 110411029 discloses controlling the operation of a water softener based on the skin moisture content of a user.

CN 207936513 discloses softening water first and heating the softened water afterwards so as to prevent the occurrence of scale.

### SUMMARY

The present invention is set out in the appended set of claims. Preferred embodiments are defined in the dependent claims. In order to solve the above problem in the prior art, that is, to solve the problem of poor control convenience of water softeners, the present application provides a control method, a control device and a computer readable storage medium for a household appliance, which realizes the solution of automatic control over a water softener based on user features, thereby improving the convenience and accuracy of the control of water softeners, and improving the bathing experience of a user.

In a first aspect, the present invention provides a control method for a household appliance, the method includes:
obtaining a user feature of a target user; determining a hardness of bathing water for the target user based on the user feature of the target user; generating a control instruction for a water softener based on the hardness of the bathing water.

Optionally, obtaining the user feature of the target user includes:
obtaining a user image of the target user; identifying the user image to determine the user feature of the target user.

Optionally, obtaining the user feature of the target user includes:
receiving a voice instruction of the target user; determining the user feature of the target user based on the voice instruction.

Determining the hardness of the bathing water for the target user based on the user feature of the target user includes:
determining the hardness of the bathing water for the target user based on the user identification of the target user, or determining the hardness of the bathing water for the target user based on the age and gender of the target user.

The method further includes:
determining a target temperature of the bathing water based on the user feature of the target user and the hardness of the bathing water; generating a control instruction for a water heater based on the target temperature of the bathing water.

Determining the target temperature of the bathing water based on the user feature of the target user and the hardness of the bathing water includes:
determining a first temperature of the bathing water based on the user feature of the target user; adjusting the first temperature based on the hardness of the bathing water to obtain the target temperature of the bathing water.

Optionally, adjusting the first temperature based on the hardness of the bathing water to obtain the target temperature of the bathing water includes:
when the hardness of the bathing water is a preset hardness, adjusting the first temperature downward by a preset temperature to obtain the target temperature, where the preset hardness is a hardness of the bathing water when a soft water function of the water softener is turned on.

Disclosed herein but not claimed is a control apparatus for a household appliance, the apparatus includes:
a feature obtaining module configured to obtain a user feature of a target user; a hardness determining module configured to determine a hardness of bathing water for the target user based on the user feature of the target user; and a controlling module configured to generate a control instruction for a water softener based on the hardness of the bathing water.

Optionally, the feature obtaining module is specifically configured to:
obtaining a user image of the target user; and identify the user image to determine the user feature of the target user.

Optionally, the feature obtaining module is specifically configured to:
receive a voice instruction of the target user; and determine the user feature of the target user based on the voice instruction.

Optionally, the hardness determining module is specifically configured to:
determine the hardness of the bathing water for the target user based on the user identification of the target user, or determine the hardness of the bathing water for the target user based on the age and gender of the target user.

Optionally, the apparatus further includes:
a temperature determining module configured to determine a target temperature of the bathing water based on the user feature of the target user and the hardness of the bathing water.

Accordingly, the controlling module is further configured to generate a control instruction for a water heater based on the target temperature of the bathing water.

Optionally, the temperature determining module includes:
a first temperature determining unit configured to determine a first temperature of the bathing water based on the user feature of the target user; a target temperature determining unit configured to adjust the first temperature based on the hardness of the bathing water to obtain the target temperature of the bathing water.

Optionally, the target temperature determining unit is specifically configured to:
when the hardness of the bathing water is a preset hardness, adjust the first temperature downward by a preset temperature to obtain the target temperature, where the preset hardness is the hardness of the bathing water when the soft water function of the water softener is turned on.

In a second aspect, the present invention further provide a control device for a household appliance, including a memory and at least one processor; the memory stores a computer executive instruction; the at least one processor executes the computer executive instruction stored in the memory to cause the at least one processor to perform the control method for the household appliance provided by any embodiment corresponding to the first aspect of the present invention.

In a third aspect, the present invention further provide a computer readable storage medium, a computer executive instruction is stored in the computer readable storage medium, and a processor when executes the computer executive instruction achieves the control method for the household appliance provided in any embodiment corresponding to the first aspect of the present invention.

Disclosed herein but not claimed is a computer program product, including a computer program, the computer program when executed by a processor achieves the control method for the household appliance provided in any embodiment corresponding to the first aspect of the present application.

It can be understood by persons of ordinary skill in the art that the control method, the control apparatus and the control device for a household appliance disclosed herein are directed to a water softener connected to a water heater, the hardness of bathing water corresponding to a target user is automatically determined based on the determined user feature of the target user, and a control instruction for the water softener is generated based on the determined hardness, thereby providing the target user with bathing water having an appropriate hardness, realizing the automatic control over the water softener, improving the convenience and accuracy of the control, and improving user's bathing

### BRIEF DESCRIPTION OF DRAWINGS

Preferred arrangements of a control method, a control apparatus and a control device for a household appliance of the present application are described below with reference to the accompanying drawings. The accompanying drawings are incorporated into and form a part of the specification, illustrate arrangements suitable for the present application and are used together with the specification to explain the principle of the present application. The accompanying drawings are as below.
FIG. 1 is a diagram of an application scene of a control method for a household appliance.
FIG. 2 is a flow diagram of a control method for a household appliance.
FIG. 3 is a flow diagram of a control method for a household appliance.
FIG. 4 is a structural schematic diagram of a control apparatus for a household appliance.
FIG. 5 is a structural schematic diagram of a control device for a household appliance.

### DETAILED DESCRIPTION

The technical solutions of the present application and how they solve the above technical problems are described in detail in the following specific arrangements. These following specific arrangements may be combined with each other, and the same or similar concepts or processes may not be repeated in certain arrangements. The arrangements of the present application will be described below in combination with the accompanying drawings.

The application scene of the arrangements of the present application is explained below.

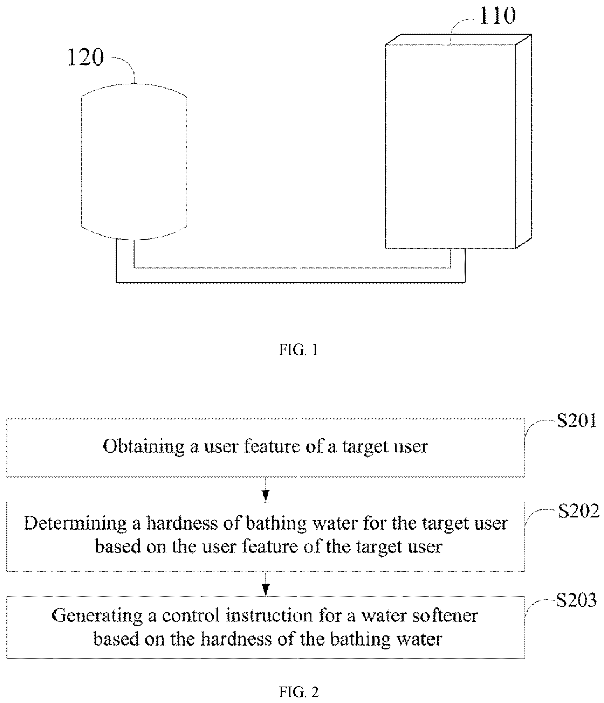

FIG. 1 is a diagram of an application scene of a control method for a household appliance provided by the present application. As shown in FIG. 1, with people's increasing demands for domestic water, more and more households are installed with a water softener 110. The water softener 110 can soften domestic water hardness to improve domestic water quality. In order to achieve bathing with soft water, the water softener 110 may be installed in a bathroom and connected to a water heater 120, to provide a user with softened bathing water.

In the prior art, the control mode of the water softener 110 is manual; that is, a user needs to turn on the water softener 110 manually before bathing, and the control mode is less convenient. Moreover, a family usually includes a plurality of members, and different members may have different needs for the hardness of bathing water. When a user forgets to set the water softener 110, usually the hardness set by the previous user is used by the user for bathing, and when the hardness that the previous user needs and the hardness that the current user needs are different, the current user needs to adjust the settings of the water softener when bathing, resulting in great inconvenience and reducing the user's bathing experience.

For the above problem, in order to improve the convenience of the control of the water softener 110, the present application provides a control method for a household appliance, the main idea of the method is determining a hardness and a temperature of bathing water based on a determined user feature of a target user, and automatically performing parameter setting of a water heater and a water softener based on the determined hardness and temperature, thereby realizing the automatic control of the water softener and the water heater, improving the convenience and accuracy of the control, and improving the user experience.

FIG. 2 is a flow diagram of a control method for a household appliance provided by the present application. Household appliances referred to in the present application may include a water softener, a water heater, and may also include a smart mirror. A control method for a household appliance is performed by a control device for a household appliance. The control device may be any device connected to the household appliance, such as a mobile terminal, a voice box, a server, etc., as shown in FIG. 2, the control method for the household appliance includes the following steps.

Step S201, a user feature of a target user is obtained.

Where, the target user is a user who is going to or has made an appointment to take a bath, and the user feature of the target user may be a voiceprint feature, a face feature, etc., and may also be login information of a user terminal.

Specifically, a user feature of a target user may be obtained based on a device such as a smart mirror, a user terminal, and the like. The smart mirror, also known as sunglasses, is usually set above a hand washing sink in a bathroom. In this arrangement, the smart mirror is equipped with a voice recognition function, and/or a face recognition function.

Specifically, a user feature of a target user may be obtained after a triggering instruction for a bathing scene is received, the target user may be a user who issues the triggering instruction for the bathing scene, or may be a corresponding user in the triggering instruction.

Specifically, in a bathroom provided with a water softener and a water heater, a target user may issue a triggering instruction for a bathing scene by a smart mirror in the bathroom.

Furthermore, when the triggering instruction includes a user identification, after the triggering instruction for the bathing scene is received, whether the triggering instruction includes a user identification is determined, and if yes, it is determined that the target user is determined based on the user identification.

Furthermore, when the triggering instruction is a voice instruction and the triggering instruction does not include a user identification, voiceprint recognition may be performed on the triggering instruction to determine the target user.

Exemplarily, a triggering instruction may be "make an appointment for bathing at 7 p.m. today", where the user who issues the triggering instruction is the target user, or a triggering instruction may be "make an appointment for bathing for a baby at 9 p.m. today", where "baby" is the target user.

The user feature of the target user includes one or more of age, gender, and user identification of the target user.

Optionally, obtaining the user feature of the target user includes:
obtaining a user image of the target user; identifying the user image to determine the user feature of the target user.

Specifically, based on a visual sensor disposed on a smart mirror, a user image such as a face image within a field of view may be collected, and the collected user image may be sent to a control device for a household appliance through communication technology such as Bluetooth, a wireless network, a local area network, etc., and the control device for the household appliance may recognize the user image, thereby extracting user features of a target user, such as gender, age, or user identification.

Specifically, after a control device for a household appliance receives a triggering instruction for a bathing scene, a vision sensor of a smart mirror may be turned on so that the vision sensor captures images of a user within its field of view according to a certain period.

Exemplarily, a user may send a voice instruction to a smart mirror to make an appointment for bathing, and then the voice instruction sent by the user is recognized by a voice recognition module of the smart mirror, and when the voice instruction is a triggering instruction for a bathing scene, a camera of the smart mirror is turned on, a user image is captured, and the user image is sent to a control device for a household appliance.

Optionally, obtaining the user feature of the target user includes:
receiving a voice instruction of the target user; determining the user feature of the target user based on the voice instruction.

Specifically, a voice instruction of the target user may be received by a smart mirror and sent to a control device for a household appliance. The control device for the household appliance recognizes the voice instruction, and if the voice instruction is a triggering instruction for a bathing scene, the voice instruction is subjected to voiceprint recognition, and based on a recognition result, a user feature such as user identification of the target user is determined.

Furthermore, a first correspondence between user identification, age and gender may further be established in advance, and then, after a user identification of a target user is determined, the age and gender of the target user may be determined based on the first correspondence and the user identification of the target user.

Step S202, a hardness of bathing water for the target user is determined based on the user feature of the target user.

Where, a water softener may control the hardness of bathing water.

Exemplarily, the hardness of bathing water may be softened to a preset hardness when a soft water function of a water softener is turned on.

In some embodiments, a corresponding target hardness of a water softener is adjustable after the soft water function is turned on, the hardness of bathing water for a target user is determined based on a user feature of the target user, therefore, the target hardness of the water softener is adjusted to the determined hardness.

The hardness of bathing water for a target user is determined based on one or more of user identification, age, and gender of the target user.

Determining the hardness of bathing water for the target user based on the user feature of the target user includes:
determining the hardness of bathing water for the target user based on the user identification of the target user, or determining the hardness of bathing water for the target user based on the age and gender of the target user.

Historical bath data of a target user is obtained based on the user identification of the target user, and according to each hardness of bathing water corresponding to each time node in the historical bath data, the hardness of bathing water for the target user corresponding to the current time is determined.

Specifically, a common hardness for the target user may be determined based on all historical hardnesses in the historical bath data of the target user, and the common hardness may be determined as the current hardness of bathing water. Where each historical hardness is the hardness of bathing water set at each historical time when the target user took a bath.

Furthermore, the current hardness of bathing water for the target user may be predicted based on the historical bath data of the target user and a preset neural network model that is pre-trained.

After the age and gender of the target user is determined, the hardness of bathing water for the target user is determined based on a pre-established second correspondence, and the age and gender of the target user.

Where, the second correspondence is a correspondence between age, gender and a hardness of bathing water.

Exemplarily, when the gender of a target user is female, it can be determined to turn on the soft water function of the water softener. When the gender of a target user is male, if the age of the target user is less than a preset age, such as 35 years old, 45 years old, 50 years old, and so on, the soft water function of the water softener is turned on.

Furthermore, the hardness of bathing water for a target user may also be determined based on user identification, age, and gender of the target user.

Specifically, each historical hardness of bathing water for a target user may be obtained based on the user identification of the target user when the target user took a bath at each historical time, and an average value of historical hardnesses may be calculated; a first hardness of bathing water for the target user may be determined based on age and gender of the target user and the above-described second correspondence; and the hardness of bathing water for the target user may be determined based on the average value of the historical hardnesses and the first hardness, to improve the accuracy of determination of the hardness of bathing water.

Exemplarily, a weighted average value of the average value of the historical hardnesses and the first hardness may be determined as the hardness of bathing water for the target user.

Step S203, a control instruction for a water softener is generated based on the hardness of the bathing water.

After the hardness of bathing water is determined, if the hardness is less than a second hardness, a control instruction for a water softener is generated based on the determined hardness of bathing water, to control the water softener to soften the bathing water, and then the softened bathing water flows into a water heater to cause the water heater to heat the bathing water, so as to obtain bathing water with suitable hardness and temperature.

Where, the second hardness is a difference value between a hardness of tap water and a preset error. The preset error maybe 3 mg/L, 5 mg/L, 10 mg/L, or other values.

The control method for a household appliance provided by the present application is directed at a water softener connected to a water heater, the hardness of bathing water corresponding to a target user is automatically determined based on the determined user feature of the target user, a control instruction for the water softener is generated based on the determined hardness, thereby providing the target user with bathing water having an appropriate hardness, realizing the automatic control over the water softener, improving the convenience and accuracy of the control, and improving the user's bathing experience.

The method further includes:
determining a target temperature of the bathing water based on the user feature of the target user and the hardness of the bathing water; generating a control instruction for a water heater based on the target temperature of the bathing water.

Specifically, a target temperature of bathing water may be determined based on a user identification of a target user and a determined hardness of the bathing water. Further, a control instruction for a water heater is generated based on the target temperature to cause the water heater to heat the bathing water to the determined target temperature.

Further, a third correspondence between a user identification, a hardness of bathing water, and a target temperature of bathing water may be established in advance. Then the target temperature of bathing water for a target user may be determined based on the third correspondence, the user identification of the target user, and the determined hardness of the bathing water.

In this arrangement, the linkage and automatic control over a water heater and a water softener are realized, thereby improving the convenience of control, and the hardness and temperature of water are determined based on user features, thereby improving the accuracy of the parameter setting and improving the user experience.

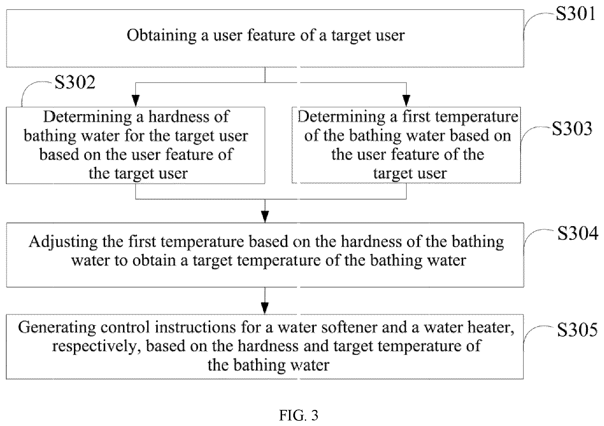

FIG. 3 is a flow diagram of a control method for a household appliance provided by the present application. This arrangement is based on the arrangement shown in FIG. 2, and the steps related to the determination of a target temperature and the generation of a control instruction for a water heater are added after step S202. As shown in FIG. 3, a control method for a household appliance provided by this arrangement includes the following steps:
step S301, obtaining a user feature of a target user;
step S302, determining a hardness of bathing water for the target user based on the user feature of the target user;
step S303, determining a first temperature of the bathing water based on the user feature of the target user.

A first temperature of bathing water is determined based on a user identification of a target user.

A user sets a first temperature of his/her corresponding bathing water through the cloud, and then, after a user identification of a target user is obtained, a corresponding first temperature is found in the cloud based on the user identification.

Specifically, a common temperature corresponding to a target user may be determined based on the user identification of the target user, and then a first temperature of bathing water for the target user may be determined based on the common temperature, gender, and age of the target user.

Step S304, the first temperature is adjusted based on the hardness of the bathing water to obtain a target temperature of the bathing water.

Specifically, the hardness of bathing water will, to a certain extent, affect the feeling of a user on the temperature of bathing water, so after the hardness of bathing water is determined, it is also necessary to adjust the first temperature based on the determined hardness of bathing water to obtain a target temperature of bathing water.

Further, after the hardness of bathing water is determined, it can be determined whether the hardness of bathing water is less than a second hardness; if yes, the first temperature is adjusted based on the hardness of bathing water to obtain the target temperature of bathing water.

A fourth correspondence between a first temperature, a hardness of bathing water, and a target temperature is established, and then based on the fourth correspondence, a hardness of bathing water for a target user, and a first temperature, a target temperature of the bathing water for the target user is determined.

In some embodiments, the target temperature may be positively proportional to the hardness of bathing water, i.e., the lower the hardness of the bathing water, the lower the target temperature.

Exemplarily, the first temperature is 60°C, the hardness of bathing water is the hardness after the soft water function of the water softener is turned on, e.g., 100 mg/L, and the target temperature may be 58°C. If the first temperature is 60°C and the hardness of bathing water is 80 mg/L, then the target temperature may be 55°C.

Optionally, adjusting the first temperature based on the hardness of the bathing water to obtain the target temperature of the bathing water includes:
when the hardness of the bathing water is a preset hardness, adjusting the first temperature downward by a preset temperature to obtain the target temperature.

Where, the preset hardness is the hardness of bathing water when the soft water function of the water softener is turned on. The preset temperature may be 3°C, 5°C or other values.

Furthermore, after the hardness and the target temperature of bathing water for a target user is determined, a first prompting message, such as a voice prompting message, may also be generated based on the hardness and the target temperature of bathing water to prompt the target user of parameters that are set for a water heater and a water softener. The first prompting message may also be sent to a user terminal to display the first prompting message on the user terminal.

Exemplarily, the first prompting message may be "Hostess, soft water mode turns on, the target temperature of the water heater has been reduced by 5°C, the target temperature is 45°C".

In some embodiments, a target user may adjust the target temperature and/or hardness based on function buttons on the water heater and softener.

Step S305, control instructions for the water softener and the water heater are generated, respectively, based on the hardness and target temperature of the bathing water.

Specifically, a control instruction for a water softener may be generated based on a determined hardness of bathing water, thereby controlling the water softener to soften the bathing water to the determined hardness; and a control instruction for a water heater may be generated based on the determined target temperature, thereby controlling the water heater to heat the bathing water to the target temperature, to provide a user with bathing water having appropriate hardness and temperature.

In this arrangement, based on the user feature of the target user, the hardness and the first temperature of bathing water are automatically determined, and the first temperature is adjusted based on the determined hardness to obtain the target temperature of bathing water. Therefore, based on the hardness and the target temperature of bathing water, control instructions for a water softener and a water heater are generated, respectively, to control the water softener and the water heater to provide the target user with bathing water having suitable hardness and temperature, thereby realizing the linkage control of the water heater and the water softener, improving the accuracy of the determination of the hardness and the temperature of bathing water, and improving the user experience.

It will be appreciated by persons of ordinary skill in the art that all or some of the steps to implement respective methods mentioned above may be accomplished by hardware associated with program instructions. Programs mentioned above may be stored in a computer readable storage medium. A program, when executed, performs the steps included in respective methods mentioned above, and the storage medium mentioned above includes various media that can store program codes such as Read-Only Memory (ROM), Random Access Memory (RAM), a magnetic disk, an optical disc, etc.

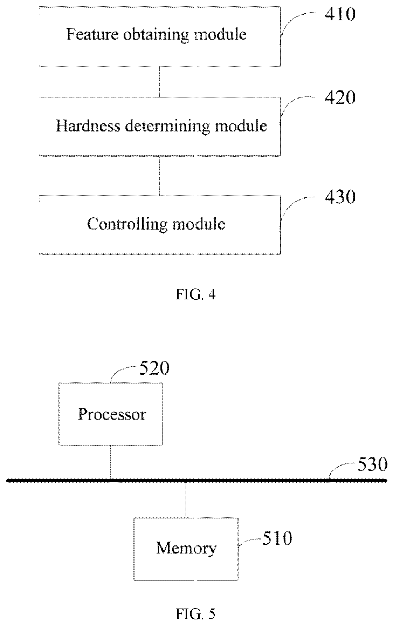

FIG. 4 is a structural schematic diagram of a control apparatus for a household appliance provided by the present application. As shown in FIG. 4, a control apparatus for a household appliance includes a feature obtaining module 410, a hardness determining module 420, and a controlling module 430.

Where, the feature obtaining module 410 is configured to obtain a user feature of a target user; the hardness determining module 420 is configured to determine a hardness of bathing water for the target user based on the user feature of the target user; and the controlling module 430 is configured to generate a control instruction for a water softener based on the hardness of the bathing water.

Optionally, a feature obtaining module 410 is specifically configured to:
obtain a user image of a target user; identify the user image to determine a user feature of the target user. Optionally, a feature obtaining module 410 is specifically configured to:
receive a voice instruction of a target user; determine a user feature of the target user based on the voice instruction.

Optionally, a hardness determining module 420 is specifically configured to:
determine a hardness of bathing water for a target user based on the user identification of the target user, or determine the hardness of bathing water for the target user based on the age and gender of the target user.

Optionally, the apparatus further includes:
a temperature determining module for determining a target temperature of the bathing water based on the user feature of the target user and the hardness of bathing water.

Accordingly, the controlling module 430 is further used to generate a control instruction for the water heater based on the target temperature of bathing water.

Optionally, the temperature determining module includes:
a first temperature determining unit configured to determine a first temperature of bathing water based on the user feature of the target user; a target temperature determining unit configured to adjust the first temperature based on the hardness of bathing water to obtain the target temperature of bathing water.

Optionally, the target temperature determining unit is specifically configured to:
when the hardness of bathing water is a preset hardness, adjust the first temperature downward by a preset temperature to obtain the target temperature, where the preset hardness is the hardness of bathing water when the soft water function of the water softener is turned on.

The control apparatus for the household appliance provided in the present application can perform the control method for the household appliance provided in any arrangement of the present application and has a corresponding functional module to perform the method and has beneficial effects.

FIG. 5 is a structural schematic diagram of a control device for a household appliance provided by the present application. As shown in FIG. 5, a control device for a household appliance includes a memory 510, a processor 520, and a computer program.

Where, the computer program is stored in the memory 510 and configured to be executed by the processor 520 to implement the control method for the household appliance provided by any arrangements corresponding to FIGS. 2-3 of the present application.

Where, the memory 510 and the processor 520 are connected via a total wire 530.

The relevant description can be understood with reference to the relevant descriptions and effects corresponding to the steps in FIGS. 2-3, which is not repeated herein.

The present application also provides a computer readable storage medium, a computer executive instruction is stored in the computer readable storage medium, the computer executive instruction when executed by a processor can achieve a control method for a household appliance provided in various arrangements described above.

The present application also provides a computer program product that includes a computer program, the computer program is stored in a readable storage medium. At least one processor of a control device for a household appliance can read the computer program from the readable storage medium, and the at least one processor executes the computer program to cause a control apparatus for a household appliance to implement a control method for a household appliance provided in various arrangements described above.

In several arrangements provided in the present application, it should be understood that the apparatus and method disclosed may be achieved in other ways. For example, the arrangements of the apparatus described above are merely schematic. For example, the division of modules is merely a logical functional division, and other division ways may be used in actual implementation, for example, multiple modules or components may be combined or may be integrated into another system, or some features may be ignored or not executed. At another point, the mutual or direct coupling or communication connection shown or discussed may be an indirect coupling or communication connection through some interfaces, apparatuses or modules in an electrical manner, mechanical manner or other manners.

The modules illustrated as separated components may or may not be physically separated, and the components shown as modules may or may not be physical modules, i.e., the components may be located in one place, or may be distributed to a plurality of network modules. Some or all of these modules may be selected to fulfill the purposes of solutions of embodiments according to actual needs.

In addition, various functional modules in various arrangements of the present application may be integrated into one processing module, or may physically exist separately, or two or more modules may be integrated into one module. The above-mentioned integrated modules can be implemented either in the form of hardware or in the form of hardware plus software functional modules.

The above-mentioned integrated module in the form of a software function module may be stored in a computer readable storage medium. The above-mentioned software function module stored in a storage medium includes several instructions to cause a computer device (a personal computer, a server, or a network device, etc.) or a processor to perform some of the steps of the methods of various embodiments of the present application. The above-mentioned storage media includes USB flash disk, mobile hard disk, ROM, RAM, magnetic disk or optical disc, and other media that can store program codes.

## Claims

1. A control method for a household appliance, performed by a control device for the household appliance, **characterized in that** the method comprises:
obtaining (S201, S301) a user feature of a target user;
determining (S202, S302) a hardness of bathing water for the target user based on the user feature of the target user; wherein,
the user feature of the target user comprises user identification of the target user, wherein historical bath data of the target user is obtained based on the user identification of the target user, and the hardness of the bathing water for the target user corresponding to a current time is determined according to each hardness of the bathing water corresponding to each time node in the historical bath data; or,
the user feature of the target user comprises age and gender of the target user, the hardness of the bathing water for the target user is determined based on a pre-established second correspondence, and the age and gender of the target user, wherein the second correspondence is a correspondence between age, gender and a hardness of bathing water; and
generating (S203, S305) a control instruction for a water softener based on the hardness of the bathing water;
wherein the method further comprises:
determining a target temperature of the bathing water based on the user feature of the target user and the hardness of the bathing water for the target user; and
generating (S305) a control instruction for a water heater based on the target temperature of the bathing water;
wherein the determining the target temperature of the bathing water based on the user feature of the target user and the hardness of the bathing water for the target user, comprises:
determining (S303) a first temperature of the bathing water based on the user feature of the target user; wherein the first temperature is set by the user through a cloud and then, after the user identification of the target user is obtained, the first temperature corresponding to the user identification of the target user is found in the cloud based on the user identification; and
adjusting (S304) the first temperature based on the hardness of the bathing water for the target user to obtain the target temperature of the bathing water by establishing a fourth correspondence between the first temperature, the hardness of the bathing water, and the target temperature, and then obtaining the target temperature of the bathing water for the target user based on the fourth correspondence, the hardness of the bathing water for the target user and the first temperature.

2. The method according to claim 1, wherein the obtaining the user feature of the target user comprises:
obtaining a user image of the target user; and
identifying the user image to determine the user feature of the target user.

3. The method according to claim 1, wherein the obtaining the user feature of the target user comprises:
receiving a voice instruction of the target user; and
determining the user feature of the target user based on the voice instruction.

4. The method according to any one of claims 1 to 3, wherein the target user is a user who issues a triggering instruction for a bathing scene.

5. The method according to claim 4, wherein before obtaining (S201, S301) the user feature of the target user, further comprising:
receiving the triggering instruction for the bathing scene.

6. The method according to claim 5, further comprising:
determining, whether the triggering instruction comprises user identification;
if the triggering instruction comprises the user identification of the target user, determining the target user based on the user identification.

7. The method according to claim 6, further comprising:
if the triggering instruction does not comprise the user identification of the target user, performing voiceprint recognition on the triggering instruction to determine the target user, wherein the triggering instruction is a voice instruction.

8. The method according to any one of claims 4 to 7, wherein the triggering instruction for the bathing scene is issued by a smart mirror.

9. A control device for a household appliance, comprising:
a memory (510) and at least one processor (520); and
the memory (510) stores a computer executive instruction;
the at least one processor (520) executes the computer executive instruction stored in the memory (510) to implement the control method for the household appliance according to any one of claims 1 to 8.

10. A computer readable storage medium, wherein a computer executive instruction is stored in the computer readable storage medium, and the control method for the household appliance according to any one of claims 1 to 8 is implemented when the computer executive instruction is executed by a processor (520).

## Patentansprüche

1. Steuerungsverfahren für ein Haushaltsgerät, das durch eine Steuerungsvorrichtung für das Haushaltsgerät durchgeführt wird, **dadurch gekennzeichnet, dass** das Verfahren Folgendes umfasst:
Erhalten (S201, S301) eines Benutzermerkmals eines Zielbenutzers;
Bestimmen (S202, S302) eines Härtegrads des Badewassers für den Zielbenutzer basierend auf dem Benutzermerkmal des Zielbenutzers; wobei
das Benutzermerkmal des Zielbenutzers eine Benutzeridentifikation des Zielbenutzers umfasst, wobei historische Baddaten des Zielbenutzers basierend auf der Benutzeridentifikation des Zielbenutzers erhalten werden und der Härtegrad des Badewassers für den Zielbenutzer, der einer aktuellen Zeit entspricht, gemäß jedem Härtegrad des Badewassers, der jedem Zeitknoten in den historischen Baddaten entspricht, bestimmt wird; oder
das Benutzermerkmal des Zielbenutzers ein Alter und ein Geschlecht des Zielbenutzers umfasst, der Härtegrad des Badewassers für den Zielbenutzer basierend auf einer vorab festgelegten zweiten Entsprechung und dem Alter und dem Geschlecht des Zielbenutzers bestimmt wird, wobei es sich bei der zweiten Entsprechung um eine Entsprechung zwischen einem Alter, einem Geschlecht und einem Härtegrad des Badewassers handelt; und
Erzeugen (S203, S305) einer Steueranweisung für einen Wasserenthärter basierend auf dem Härtegrad des Badewassers;
wobei das Verfahren ferner Folgendes umfasst:
Bestimmen einer Zieltemperatur des Badewassers basierend auf dem Benutzermerkmal des Zielbenutzers und dem Härtegrad des Badewassers für den Zielbenutzer; und
Erzeugen (S305) einer Steueranweisung für einen Warmwasserbereiter basierend auf der Zieltemperatur des Badewassers;
wobei das Bestimmen der Zieltemperatur des Badewassers basierend auf dem Benutzermerkmal des Zielbenutzers und dem Härtegrad des Badewassers für den Zielbenutzer Folgendes umfasst:
Bestimmen (S303) einer ersten Temperatur des Badewassers basierend auf dem Benutzermerkmal des Zielbenutzers; wobei die erste Temperatur durch den Benutzer über eine Cloud eingestellt wird und dann, nachdem die Benutzeridentifikation des Zielbenutzers erhalten worden ist, die erste Temperatur, die der Benutzeridentifikation des Zielbenutzers entspricht, in der Cloud basierend auf der Benutzeridentifikation gefunden wird; und
Anpassen (S304) der ersten Temperatur basierend auf dem Härtegrad des Badewassers für den Zielbenutzer, um die Zieltemperatur des Badewassers durch Festlegen einer vierten Entsprechung zwischen der ersten Temperatur, dem Härtegrad des Badewassers und der Zieltemperatur zu erhalten, und dann Erhalten der Zieltemperatur des Badewassers für den Zielbenutzer basierend auf der vierten Entsprechung, dem Härtegrad des Badewassers für den Zielbenutzer und der ersten Temperatur.

2. Verfahren nach Anspruch 1, wobei das Erhalten des Benutzermerkmals des Zielbenutzers Folgendes umfasst:
Erhalten eines Benutzerbildes des Zielbenutzers; und
Identifizieren des Benutzerbildes, um das Benutzermerkmal des Zielbenutzers zu bestimmen.

3. Verfahren nach Anspruch 1, wobei das Erhalten des Benutzermerkmals des Zielbenutzers Folgendes umfasst:
Empfangen einer Sprachanweisung des Zielbenutzers; und
Bestimmen des Benutzermerkmals des Zielbenutzers basierend auf der Sprachanweisung.

4. Verfahren nach einem der Ansprüche 1 bis 3, wobei es sich bei dem Zielbenutzer um einen Benutzer handelt, der eine Auslöseanweisung für eine Badeszene erteilt.

5. Verfahren nach Anspruch 4, wobei vor dem Erhalten (S201, S301) des Benutzermerkmals des Zielbenutzers, ferner umfassend: Empfangen der Auslöseanweisung für die Badeszene.

6. Verfahren nach Anspruch 5, ferner umfassend:
Bestimmen, ob die Auslöseanweisung eine Benutzeridentifikation umfasst;
wenn die Auslöseanweisung die Benutzeridentifikation des Zielbenutzers umfasst, Bestimmen des Zielbenutzers basierend auf der Benutzeridentifikation.

7. Verfahren nach Anspruch 6, ferner umfassend:
wenn die Auslöseanweisung die Benutzeridentifikation des Zielbenutzers nicht umfasst, Durchführen einer Sprachabdruckerkennung bei der Auslöseanweisung, um den Zielbenutzer zu bestimmen, wobei es sich bei der Auslöseanweisung um eine Sprachanweisung handelt.

8. Verfahren nach einem der Ansprüche 4 bis 7, wobei die Auslöseanweisung für die Badeszene durch einen intelligenten Spiegel erteilt wird.

9. Steuerungsvorrichtung für ein Haushaltsgerät, umfassend:
einen Speicher (510) und mindestens einen Prozessor (520); und
wobei der Speicher (510) eine Computerausführungsanweisung speichert;
wobei der mindestens eine Prozessor (520) die Computerausführungsanweisung, die in dem Speicher (510) gespeichert ist, ausführt, um das Steuerungsverfahren für das Haushaltsgerät nach einem der Ansprüche 1 bis 8 umzusetzen.

10. Computerlesbares Speichermedium, wobei eine Computerausführungsanweisung in dem computerlesbaren Speichermedium gespeichert ist und das Steuerungsverfahren für das Haushaltsgerät nach einem der Ansprüche 1 bis 8 umgesetzt wird, wenn die Computerausführungsanweisung durch einen Prozessor (520) ausgeführt wird.

## Revendications

1. Procédé de commande pour un appareil ménager, réalisé par un dispositif de commande pour l'appareil ménager, **caractérisé en ce que** le procédé comprend :
l'obtention (S201, S301) d'une caractéristique d'utilisateur d'un utilisateur cible ;
la détermination (S202, S302) d'une dureté de l'eau de baignade pour l'utilisateur cible sur la base de la caractéristique d'utilisateur de l'utilisateur cible ; dans lequel,
la caractéristique d'utilisateur de l'utilisateur cible comprend une identification d'utilisateur de l'utilisateur cible, dans lequel des données de baignade historiques de l'utilisateur cible sont obtenues sur la base de l'identification d'utilisateur de l'utilisateur cible, et la dureté de l'eau de baignade pour l'utilisateur cible correspondant à une heure actuelle est déterminée selon chaque dureté de l'eau de baignade correspondant à chaque nœud temporel dans les données de baignade historiques ; ou,
la caractéristique d'utilisateur de l'utilisateur cible comprend l'âge et le sexe de l'utilisateur cible, la dureté de l'eau de baignade pour l'utilisateur cible est déterminée sur la base d'une deuxième correspondance préétablie, et de l'âge et du sexe de l'utilisateur cible, dans lequel la deuxième correspondance est une correspondance entre l'âge, le sexe et une dureté de l'eau de baignade ; et
la génération (S203, S305) d'une instruction de commande pour un adoucisseur d'eau sur la base de la dureté de l'eau de baignade ;
dans lequel le procédé comprend en outre :
la détermination d'une température cible de l'eau de baignade sur la base de la caractéristique d'utilisateur de l'utilisateur cible et de la dureté de l'eau de baignade pour l'utilisateur cible ; et
la génération (S305) d'une instruction de commande pour un chauffe-eau sur la base de la température cible de l'eau de baignade ;
dans lequel la détermination de la température cible de l'eau de baignade sur la base de la caractéristique d'utilisateur de l'utilisateur cible et de la dureté de l'eau de baignade pour l'utilisateur cible, comprend :
la détermination (S303) d'une première température de l'eau de baignade sur la base de la caractéristique d'utilisateur de l'utilisateur cible ; dans lequel la première température est définie par l'utilisateur par l'intermédiaire d'un nuage et ensuite, après que l'identification d'utilisateur de l'utilisateur cible est obtenue, la première température correspondant à l'identification d'utilisateur de l'utilisateur cible est trouvée dans le nuage sur la base de l'identification d'utilisateur ; et
l'ajustement (S304) de la première température sur la base de la dureté de l'eau de baignade pour l'utilisateur cible afin d'obtenir la température cible de l'eau de baignade en établissant une quatrième correspondance entre la première température, la dureté de l'eau de baignade, et la température cible, puis l'obtention de la température cible de l'eau de baignade pour l'utilisateur cible sur la base de la quatrième correspondance, de la dureté de l'eau de baignade pour l'utilisateur cible et de la première température.

2. Procédé selon la revendication 1, dans lequel l'obtention de la caractéristique d'utilisateur de l'utilisateur cible comprend :
l'obtention d'une image d'utilisateur de l'utilisateur cible ; et
l'identification de l'image d'utilisateur pour déterminer la caractéristique d'utilisateur de l'utilisateur cible.

3. Procédé selon la revendication 1, dans lequel l'obtention de la caractéristique d'utilisateur de l'utilisateur cible comprend :
la réception d'une instruction vocale de l'utilisateur cible ; et
la détermination de la caractéristique d'utilisateur de l'utilisateur cible sur la base de l'instruction vocale.

4. Procédé selon l'une quelconque des revendications 1 à 3, dans lequel l'utilisateur cible est un utilisateur qui émet une instruction de déclenchement pour une scène de baignade.

5. Procédé selon la revendication 4, comprenant en outre, avant l'obtention (S201, S301) de la caractéristique d'utilisateur de l'utilisateur cible :
la réception de l'instruction de déclenchement pour la scène de baignade.

6. Procédé selon la revendication 5, comprenant en outre :
la détermination de si l'instruction de déclenchement comprend une identification d'utilisateur ;
si l'instruction de déclenchement comprend l'identification d'utilisateur de l'utilisateur cible, la détermination de l'utilisateur cible sur la base de l'identification d'utilisateur.

7. Procédé selon la revendication 6, comprenant en outre :
si l'instruction de déclenchement ne comprend pas l'identification d'utilisateur de l'utilisateur cible, la réalisation d'une reconnaissance d'empreinte vocale sur l'instruction de déclenchement pour déterminer l'utilisateur cible, dans lequel l'instruction de déclenchement est une instruction vocale.

8. Procédé selon l'une quelconque des revendications 4 à 7, dans lequel l'instruction de déclenchement pour la scène de baignade est émise par un miroir intelligent.

9. Dispositif de commande pour un appareil ménager, comprenant :
une mémoire (510) et l'au moins un processeur (520) ; et
la mémoire (510) stocke une instruction d'exécution informatique ;
l'au moins un processeur (520) exécute l'instruction d'exécution informatique stockée dans la mémoire (510) pour mettre en œuvre le procédé de commande pour l'appareil ménager selon l'une quelconque des revendications 1 à 8.

10. Support de stockage lisible par ordinateur, dans lequel une instruction d'exécution informatique est stockée dans le support de stockage lisible par ordinateur, et le procédé de commande pour l'appareil ménager selon l'une quelconque des revendications 1 à 8 est mis en œuvre lorsque l'instruction d'exécution informatique est exécutée par un processeur (520).
